# EUROPEAN PATENT APPLICATION

(11) **EP 2 410 796 A1**
(43) Date of publication of application: **25.01.2012**
(21) Application number: 10305802.0
(22) Date of filing: 20.07.2010
(51) Int. Cl.: H04W 52/02, G06F 1/32

(54) **Method to configure a device in or out of an IDLE state**

(71) Applicant: Alcatel Lucent, 75007 Paris (FR)
(72) Inventor: Verchere, Dominique, 91620, Nozay (FR); Morea, Annalisa, 91620, Nozay (FR)
(74) Representative: Hervouet, Sylvie

(57) **Abstract**

A method to manage energy consumption, in a communication network comprising nodes comprising devices, wherein each device is either in an UP state (2) where said device is up and ready to operate or in a DOWN state (1) where said device is shut down, wherein each device may additionally be configured into an IDLE state (3) where components of said device that can return to an up and ready to operate state in less than a given maximum awakening time are shut down and components of said device that need a longer time to get to an up and ready to operate state are kept in an up and ready to operate state.

## Description

The technical domain of the invention is the domain of communication networks.

More particularly, the invention concerns a method to manage the power consumption of said networks.

A communication network comprises links typically composed of wires or optical fibres linking nodes. Since links are passive they can be forgotten when it comes to power consumption. This is different for nodes which can comprise a lot of devices which in turn can comprise a lot of components. These components can be electronic, optical or opto-electronic and are dedicated to the transport of signals. If the purely optical components are most often passive and not power consuming, other components are active and consume power, generally electric or active optical, when there are powered on.

In typical communication networks, the number of nodes or routers is very important. This means that the number of devices or components consuming energy can be very large.

A device in a node can be in two different states. A first state is DOWN state and a second state is UP state. In DOWN state, all the components of the device are shut down or powered off. In UP state, all the components of the device are powered on and are ready to operate.

The time for a device to boot-up, that is, to transition from DOWN state to UP state, or to shutdown, that is to transition from UP state to DOWN state, at least for some of these devices, is generally too important to allow them to be booted only when the quantity of traffic to carry needs it, that is, reaches or exceeds a defined threshold.

As a consequence, today the number of UP devices and consequently of powered on components consuming power is dimensioned for the worst case, that is, they are generally all UP/powered on permanently. This may prejudicially lead to tremendous power consumptions.

Consequently the number of UP devices is most often not dependent nor related to the quantity of traffic to be carried on the communication network.

A solution trying to reduce said power consumption may be based on a planning method to forecast the data traffic demand on the communication network. According to the data traffic demand forecasted, a network operator can select some devices to be booted / in UP state and some devices to be shutdown / in DOWN state. Such solution clearly suffers from inaccurate results. Since the time to boot-up or shutdown a device may be very important, such a solution uses traffic demand forecasted long in advance by said planning method and consequently far from being accurate.

The present invention addresses and solves this problem. The object of the invention is, in order to reduce energy consumption, to add, besides the previous UP and DOWN states of a device, an intermediate IDLE state, and means to selectively configure a device in or out of said IDLE state.

When a device is in said optimal IDLE state, its components are parted in two categories. In a first category, components able to quickly return to an up and ready to operate state are shut down. In a second category, components that need a long time to get to an up and ready to operate state are kept in an up and ready to operate state. Said categorisation is made based on a maximum awakening time.

The proposed solution advantageously offers the possibility to replace a maybe long time to boot-up (DOWN to UP) or to shutdown (UP to DOWN) a device, by a far shorter time to wake-up (IDLE to UP) or hibernate (UP to IDLE) a device, thus allowing forecasts of traffic demand to be served by a better amount of network devices and consequently a far better management of devices may be achieved, with a correlated drastic power consumption decrease.

According to another feature, said communication network is a wavelength switched optical network, WSON.

According to another feature, said communication network uses a MultiProtocol Label Switching protocol, MPLS, or a Generalized MPLS and a device is configured to or from IDLE state by sending a message to said device or to its node.

According to another feature, said message comprises an administrative status object indicative of the state of the device at least among: IDLE, UP, DOWN.

According to another feature, the protocol is Resource ReSerVation Protocol, RSVP, and said administrative status object comprises an ADMIN_STATUS object with an added bit S to indicate an IDLE state.

According to another feature, said ADMIN_STATUS object is in the form of a 32 bits object comprising 32 positions numbered from 00 to 31 and wherein said added bit S is at position 25.

According to another feature, said added bit S is decoded in conjunction with an existing state bit A, taking a value "1" in DOWN state and a value "0" in UP state, in the following manner:
[A, S] = [1, 0] indicates an DOWN state,
[A, S] = [1, 1] indicates an IDLE state,
[A, S] = [0, 0] indicates an UP state, and
[A, S] = [0, 1] indicates an ERROR state.

According to another feature, said message is a PATH, RESV or NOTIFY message.

According to another feature, said maximum awakening time is taken equal to 1 mn.

According to another feature, said maximum awakening time is taken equal to a refresh period parameter of signalling.

Others features, details and advantages of the invention will become more apparent from the detailed illustrating description given hereafter with respect to the drawings on which:
- figure 1 shows a Finite State Diagram of a prior art device,
- figure 2 shows a Finite State Diagram as augmented according to the invention,
- figure 3 shows a typical communication network,
- figure 4 shows a typical segment of a communication network comprising a link surrounded by two nodes and four channels,
- figure 5 displays the arrangement of a amended ADMIN_STATUS object.

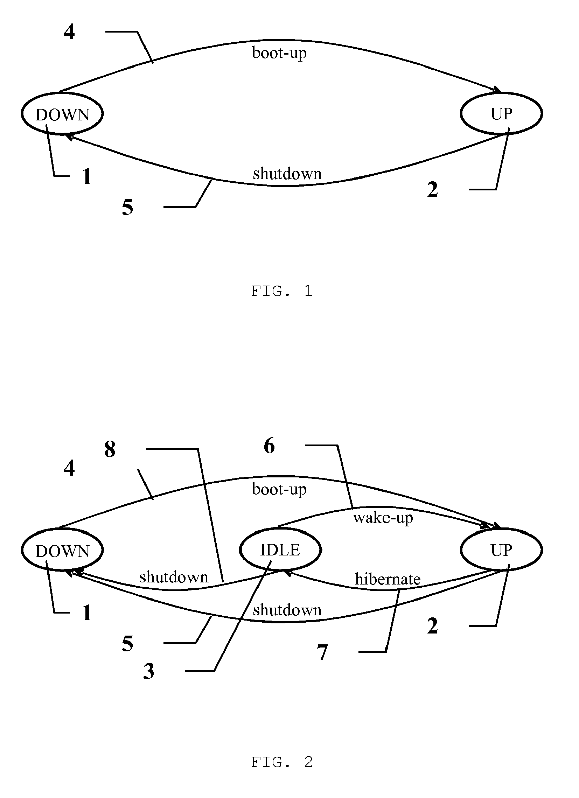

According to figure 1, is presented a Finite State Diagram, FSD, of a prior art device. A device is comprised in a node or router in a communication network 10. A device may be in two states: UP state 1 and DOWN state 2. In DOWN state 2, all the components of the device are shut down or powered off. In UP state, all the components of the device are powered on and the device is ready to operate. Two transitions exist in such a FSD. A first transition 4 is from DOWN state 1 to UP state 2 and is called boot-up 4. A second transition 5 is from UP state 2 to DOWN state 1 and is called shutdown 5.

Since such a device is a rather complex system, the time for said device to boot-up, that is to transition from DOWN state 1 to UP state 2, or to shutdown, that is to transition from UP state 2 to DOWN state 1, at least for some of these devices, is generally too important to allow them to be booted only when the quantity of traffic to carry needs it.

The complexity of such a device may lead to an important time to be booted and be active in an operational UP mode. The reasons for a long time to boot-up or to shutdown such a device is that the device bootstrap may include the following steps:
- to configure control registers for transmitters and receivers,
- to perform diagnostic tests by writing and reading various data patterns,
- to initialize an interrupt vector and other related features as well as memories such as DRAM, SRAM or others, sized according to the device components,
- to initialize software structures of the data forwarding functions as well as controller functions, depending of the number and kind of nodes,
- to download previous router/device images that can help to configure some router/device,
- other optional functions during the boot sequence.

A device may comprise different kinds of components. Hopefully said components may be parted in power components that consume a lot of power energy but exhibit a rather simple control structure associated with a rather short time to boot-up and can quickly return to an up and ready to operate state, and control components that consume few power energy but exhibit a more complex structure leading to a rather long time to boot-up and need a long time to return to an up and ready to operate state.

The main idea of the invention is to take advantage of said possible partition to manage energy consumption, by adding, besides the previous UP 1 and DOWN 2 states of a device, an intermediate IDLE state 3 and means to selectively configure a device in or out of said IDLE state 3.

Figure 2 shows an extended FSD including said IDLE state 3. In addition to UP 1 and DOWN 2 states, a new IDLE state 3 is present. In addition to previous transitions 4 and 5, three new transitions can be found. A transition 6 is from IDLE state 3 to UP state 2 and is called wake-up 6. A transition 7 is from UP state 2 to IDLE state 3 and is called hibernate 7. A transition 8 is from IDLE state 3 to DOWN state 1 and is called shutdown 8. Another transition from DOWN state 1 to IDLE 3 could also be added. However such a transition has been considered irrelevant.

When a device is in said IDLE state 3, its components are parted in two categories. A first category comprises components able to quickly return to an up and ready to operate state, that is, e.g. power components, are shut down. Quickly means here in less than a given maximum awakening time. A second category comprises components that need a long time to get to an up and ready to operate state, that is, e.g. control components, are not shutdown, and after their boot-up is completed, said components are kept in an up and ready to operate state. A long time here means more than said maximum awakening time.

The IDLE state 3 is an optimum state that requires a minimal power supply, e.g. limited to supporting control components, and that however enable the device to be quickly returned to an UP state, by turning on only components exhibiting short time requirements to get back to an up and ready to operate state, e.g. power components.

The features taught in the present document can be applied to any kind of communication network 10, including wavelength switched optical network, WSON.

Said communication network 10 may uses a MultiProtocol Label Switching protocol, MPLS, or a Generalized MPLS, GMPLS. In this case, a device is configured to or from IDLE state by sending a network management or control message to said device. Said network management or control message may be a signalling or a provisioning message. If said device is not alone able to receive/treat such message, the message may be send to the node comprising said device. Said node is then able to receive said message and to configure the device accordingly.

Said message advantageously comprises an administrative status object indicative of the state of the device at least among: IDLE, UP, DOWN.

In the following a generally used signalling protocol, Resource ReSerVation Protocol, RSVP, is considered in order to exemplify the method. The one skilled in the art would also be able to apply the method to any other protocol syntax such as e.g. Label Distribution Protocol, LDP.

For example, in a communication network 10 using Resource ReSerVation Protocol, RSVP, said administrative status object comprises an ADMIN_STATUS object. Said ADMIN_STATUS is then provided with an added bit S to indicate an IDLE state.

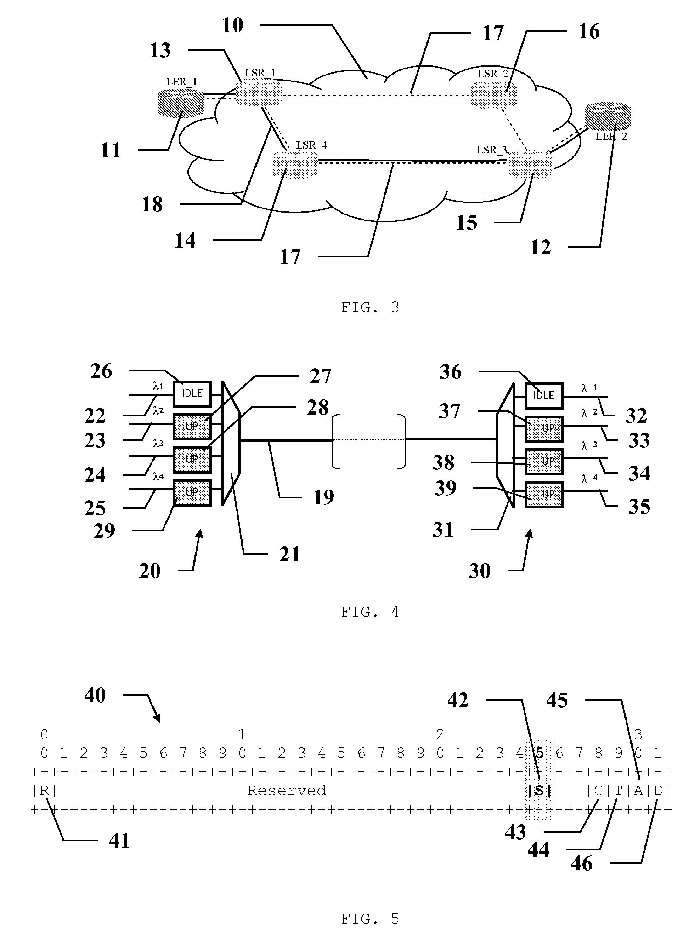

As is known in the art, said ADMIN_STATUS object is in the form of a 32 bits object comprising 32 positions numbered from 00 to 31. This is illustrated at figure 5. Up to now, said ADMIN_STATUS object comprises a first bit R 41, twenty eight reserved bits 00 to 27, and four bits at positions 28-31 respectively dedicated to bit C 43, T 44, A 45 and D 46. Bit A 45, is an administrative status, taking a value "1" in DOWN state and a value "0" in UP state.

In order to add said IDLE state, a new bit S 42 must be added at any free/reserved position. The particular position 25 has been chosen to be dedicated to said added bit S 42.

Said added bit S 42 is decoded in conjunction with said previously existing state bit A, in the following manner:
[A, S] = [1, 0] indicates an DOWN state,
[A, S] = [1, 1] indicates an IDLE state,
[A, S] = [0, 0] indicates an UP state, and
[A, S] = [0, 1] indicates an ERROR state.

Said ERROR state is normally not used, and any device receiving such combination [A, S] = [0, 1] must send back an error message, e.g. in the form of a PATH_ERR or a RESV_ERR.

For example, in a communication network 10 using Resource ReSerVation protocol, RSVP, said message comprising a ADMIN_STATUS, and able to change the state of a device receiving said message may be a PATH, RESV or NOTIFY message. A PATH or RESV message is naturally sent/propagated along the route of a Label Switch Path, LSP. Said route can be described explicitly through Explicit Route Object ,ERO. A NOTIFY message is individually sent to a given directly addressed device.

The bit S should be ignored by any component of a device not supporting IDLE state.

Figure 3 illustrates a typical network 10. Said network comprises four internal 13-16 (LSR_1-LSR_4, LSR for Label Switch Router) nodes and two external nodes 11, 12 (LER-1, LER2, LER for Label Edge Router). These nodes are linked by several links 17. Some such links may be aggregated in a connection such as a Labelled Switch Path, LSP, 18 such as the one successively passing through nodes 11-13-14-15-12.

Now referring to figure 4 will be illustrated, by way of an example, what a device is and what a component is. Figure 4 shows a network extract comprising a link 19 between an egress stage 20 of a first node and an ingress stage 30 of a second node. Said link 19 is e.g. an optical fibre. Said link is used to transport four channels, e.g. Wavelength Division Multiplexed, WDM, channels. Each channel uses a given wavelength λ1-λ4. A first channel 22, using wavelength λ1 is sent by a first transmitter 26. A second channel 23, using wavelength λ3 is sent by a second transmitter 27. A third channel 24, using wavelength λ3 is sent by a third transmitter 28. A fourth channel 25, using wavelength λ4 is sent by a fourth transmitter 29. All these four channels are multiplexed or aggregated by multiplexer 21 into the link 19. At the other end, the four channels are separated again by a demultiplexer 31. The first channel is received by a first receiver 36 to provide a first egress channel 32 identical to the first channel 22. The second channel is received by a second receiver 37 to provide a second egress channel 33 identical to the first channel 23. The third channel is received by a third receiver 37 to provide a third egress channel 34 identical to the third channel 24. The fourth channel is received by a fourth receiver 39 to provide a fourth egress channel 35 identical to the fourth channel 25.

A device is at the lowest hierarchical level that allows management of an IDLE state, in order to provide the finest granularity. A device is advantageously inside a node. Under the device level can only be found a single level of components that can only be either ON/UP of OFF/DOWN.

In the previous example, a device is e.g. an interface. An interface is e.g. a transmitter 26-29 or a receiver 36-39 on a channel. Such a transmitter 26-29 may e.g. be a laser transmitter. Said laser transmitter comprises several components such as: the laser itself, a card controlling the laser, a quality monitor, a power supply, a servo card, etc.

While a device can be in the three UP, DOWN and IDLE states, components can only be either UP (powered on ready to operate) or DOWN (powered off). When a device is UP all of its components are powered on and ready to operate and the device itself is ready to operate. When a device is DOWN all of its components are powered off. When a device is IDLE, some of its components remain powered on and ready to operate and some of its components are powered off, depending of their respective time to wake-up compared to a maximum awakening time, that is to go from powered off state to powered on and ready to operate state, of each component.

In the case of said laser transmitter, it is generally observed that the laser itself, which is hopefully one of the biggest power consumers, presents a short awakening time, and that other components such as control cards present a longer awakening time. When said laser transmitter is in IDLE state, said laser can be powered off with a great consumption decrease, while control cards may be kept powered on.

On figure 4, it is considered that only a 75% of total traffic capacity is enough. Accordingly one out off the four transmitter devices 26-29, e.g. the first one 26, can be put in IDLE state. The corresponding first channel receiver 36 can advantageously also be put in IDLE state.

Advantageously, when using a PATH message, said PATH message is propagated along the route of an LSP. So doing a single PATH message may apply a given state change, e.g. from UP to IDLE, to all the devices encountered along said LSP. Each device, when receiving said signalling PATH message, updates its state and transmits the same message to the successive device along said LSP. In that case the ADMIN_STATUS object has its R bit positioned.

Higher hierarchical level can also be used to manage states and particularly IDLE state. Over the previous level comprising interfaces can be found a level of line cards, a line card gathering several interfaces. Over again can be found a level of nodes/routers, a router gathering several line cards. Over again can be defined a level of clusters, a cluster gathering several nodes. At each such higher level, a configuring state message can be sent. Sending such a configuring state message is equivalent to sending a same configuring state message to all the devices included into said cluster/node/line card.

When a device is in IDLE state, among all of its components, some are powered off, and the other are maintained powered up and ready to operate, based on their respective awakening time, compared to a max awakening time. As the one skilled in the art can understand, the choice of said max awakening time is a trade-off. When said max awakening time is chosen too long, many components can be powered off leading to a good consumption decrease, however, the resulting delay forbids to configure the number of devices if the communication network to be in the UP state according to an accurate forecast on traffic demand. When said max awakening time is chosen too short, a good configuration of the number of devices of the communication network to be in the UP state can be reached according to forecast of the traffic demand, but the number of components that can be powered off is reduced, so limiting the power consumption decrease that can be expected.

In the context of a GMPLS communications network a maximum awakening time of 1 mn has been found to be a satisfactory trade-off. A choice in a range from 30 s to 3 mn is also acceptable.

Such maximum awakening times are to be compared with a total boot-up time which typically lasts 30mn for e.g. a laser transmitter. Some devices may even present boot-up time of several hours.

In a communication network, configuration of devices may be refreshed on a periodic basis. A configurable parameter indicating a refresh period of signalling time may be considered. It is interesting to correlate said refresh period parameter of signalling time to said maximum awakening time in order to refresh device configurations in accordance with the traffic forecast period. According to a particular embodiment, said maximum awakening time is taken equal to a refresh period parameter of signalling or to a multiple or sub multiples of it. In a Resource ReSerVation Protocol, RSVP, syntax, said refresh period parameter of signalling is expressed in an object named TIME_VALUE. Its default value is 30 s.

## Claims

1. A method to manage energy consumption, in a communication network (10) comprising nodes (11-16) comprising devices (26-29), wherein each device (26-29) is either in an UP state (2) where said device is up and ready to operate or in a DOWN state (1) where said device is shut down, ***characterized in that*** each device (26-29) may additionally be configured into an IDLE state (3) where components of said device (26-29) that can return to an up and ready to operate state in less than a given maximum awakening time are shut down and components of said device (26-29) that need a longer time to get to an up and ready to operate state are kept in an up and ready to operate state.

2. The method of claim **1**, wherein said communication network (10) is a wavelength switched optical network, WSON.

3. The method of claim **1** or **2**, wherein said communication network (10) uses a MultiProtocol Label Switching protocol, MPLS, or a Generalized MPLS, and wherein a device (26-29) is configured to or from IDLE state by sending a message to said device or to its node.

4. The method of claim **3**, wherein said message comprises an administrative status object indicative of the state of the device (26-29) at least among: IDLE, UP, DOWN.

5. The method of claim **4**, wherein the protocol is Resource ReSerVation Protocol, RSVP, and said administrative status object comprises an ADMIN_STATUS object with an added bit S (42) to indicate an IDLE state (3).

6. The method of claim **5**, wherein said ADMIN_STATUS object is in the form of a 32 bits object comprising 32 positions numbered from 00 to 31 and wherein said added bit S (42) is at position 25.

7. The method of claim **5** or **6**, wherein said added bit S (42) is decoded in conjunction with an existing state bit A (45), taking a value "1" in DOWN state and a value "0" in UP state, in the following manner:
[A, S] = [1, 0] indicates an DOWN state (1),
[A, S] = [1, 1] indicates an IDLE state (3),
[A, S] = [0, 0] indicates an UP state (2), and
[A, S] = [0, 1] indicates an ERROR state.

8. The method of any one of claims **5** to **7**, wherein said message is a PATH, RESV or NOTIFY message.

9. The method of any one of claims **1** to **8**, wherein said maximum awakening time is taken equal to 1 mn.

10. The method of any one of claims **5** to **8**, wherein said maximum awakening time is taken equal to a refresh period parameter of signalling.

## Amended claims

### Amended claims in accordance with Rule 137(2) EPC.

**1.** A method to manage energy consumption, in a communication network (10) comprising nodes (11-16) comprising devices (26-29), wherein each device (26-29) is either in an UP state (2) where said device is up and ready to operate, or in a DOWN state (1) where said device is shut down, or in an IDLE state (3) **characterized in that**, when said device (26-29) is in an IDLE state (3), components of said device (26-29) that can return to an up and ready to operate state in less than a given maximum awakening time are shut down and components of said device (26-29) that need a longer time to get to an up and ready to operate state are kept in an up and ready to operate state.

**2.** The method of claim 1, wherein said communication network (10) is a wavelength switched optical network, WSON.

**3.** The method of claim 1 or 2, wherein said communication network (10) uses a MultiProtocol Label Switching protocol, MPLS, or a Generalized MPLS, and wherein a device (26-29) is configured to or from IDLE state by sending a message to said device or to its node.

**4.** The method of claim 3, wherein said message comprises an administrative status obj ect indicative of the state of the device (26-29) at least among: IDLE, UP, DOWN.

**5.** The method of claim 4, wherein the protocol is Resource Reservation Protocol, RSVP, and said administrative status object comprises an ADMIN_STATUS object with an added bit S(42) to indicate an IDLE state (3).

**6.** The method of claim 5, wherein said ADMIN_STATUS object is in the form of a 32 bits object comprising 32 positions numbered from 00 to 31 and wherein said added bit S(42) is at position 25.

**7.** The method of claim 5 or 6, wherein said added bit S (42) is decoded in conj unction with an existing state bit A (45), taking a value "1" in DOWN state and a value "0" in UP state, in the following manner:
[A, S] = [1, 0] indicates an DOWNstate (1),
[A, S] = [1,1] indicates an IDLE state (3),
[A, S] = [0, 0] indicates an UP state (2), and
[A, S] = [0, 1] indicates an ERRORstate.

**8.** The method of any one of claims 5 to 7, wherein said message is a PATH, RESV or NOTIFY message.

**9.** The method of any one of claims 1 to 8, wherein said maximum awakening time is taken equal to 1 mn.

**10.** The method of any one of claims 5 to 8, wherein said maximum awakening time is taken equal to a refresh period parameter of signalling.
